(19) Europäisches Patentamt
European Patent Office
Office européen des brevets

(11) EP 4 471 906 A1

(12) **EUROPEAN PATENT APPLICATION**
published in accordance with Art. 153(4) EPC

(43) Date of publication:
04.12.2024 Bulletin 2024/49

(51) International Patent Classification (IPC):
H01M 4/62 (2006.01)     H01M 4/04 (2006.01)
H01M 4/131 (2010.01)    H01M 4/1391 (2010.01)
H01M 4/36 (2006.01)     H01M 4/66 (2006.01)
H01M 4/02 (2006.01)

(21) Application number: 23747417.6

(22) Date of filing: 30.01.2023

(52) Cooperative Patent Classification (CPC):
H01M 4/02; H01M 4/04; H01M 4/131; H01M 4/139;
H01M 4/1391; H01M 4/36; H01M 4/62; H01M 4/66;
H01M 10/052; Y02E 60/10

(86) International application number:
PCT/KR2023/001366

(87) International publication number:
WO 2023/146376 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.01.2022  KR 20220013757
14.03.2022  KR 20220031451

(71) Applicant: LG Energy Solution, Ltd.
Seoul 07335 (KR)

(72) Inventors:
• KIM, Hak-Yoon
Daejeon 34122 (KR)
• LIM, Chang-Yoon
Daejeon 34122 (KR)
• KIM, Yong-Jun
Daejeon 34122 (KR)
• PARK, Moon-Soo
Daejeon 34122 (KR)

(74) Representative: Plasseraud IP
104 Rue de Richelieu
CS92104
75080 Paris Cedex 02 (FR)

(54) **ELECTRODE AND ELECTROCHEMICAL DEVICE COMPRISING SAME**

(57) An electrode having a multilayer structure formed by stacking a plurality of unit electrode active material layers. The electrode is formed from granules comprising an electrode active material densely packed in each unit electrode active material layer, and even though different types of electrode active materials are used in each unit electrode active material layer, the intermixing of the electrode active materials does not occur at or near the interface of the unit electrode active material layers, resulting in less interferences of electrochemical properties between the different types of electrode active materials. Additionally, the electrode active material layer has higher porosity of the unit electrode active material layer closer to the electrode surface than the unit electrode active material layer closer to the current collector. Accordingly, it is possible to improve electrolyte wetting and ionic conductivity of the electrode.

FIG. 1

EP 4 471 906 A1

**Description**

TECHNICAL FIELD

The present application claims priority to Korean Patent Application No. 10-2022-0013757 filed on January 28, 2022 and Korean Patent Application No. 10-2022-0031451 filed on March 14, 2022 in the Republic of Korea, the disclosure of which is incorporated herein by reference. The present disclosure relates to an electrode manufactured by a dry method of packing a plurality of granules comprising an electrode active material and an electrode binder and an electrochemical device comprising the same.

BACKGROUND ART

Due to the increasing use of fossil fuels, there is a growing demand for the use of alternative energy and clean energy, and in such circumstances, many studies are being made in the field of energy generation and storage using electrochemistry. A typical example of electrochemical devices using electrical and chemical energy is secondary batteries, and the range of application of secondary batteries is gradually expanding. One of typical secondary batteries, lithium secondary batteries are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and the range of application of lithium secondary batteries is expanding to an auxiliary power source through a grid.

Recently, many studies are being made to develop batteries using a plurality of electrode active materials to improve battery performance. When a single electrode active material layer is formed by blending the plurality of electrode active materials, the battery performance degrades due to the interference effect between the active material types. To address this issue, suggestions have been made on methods for manufacturing electrodes with multiple electrode active material layers having a specific function for each layer to improve electrode characteristics and battery performance.

However, the electrode manufacturing method using the commonly used process of coating a slurry for forming an electrode active material layer is difficult to achieve the goal for improving the effect of the multilayer electrode. The multilayer electrode manufacturing process by the slurry coating method usually uses a wet on wet process including applying an upper slurry to the surface of a lower slurry before the applied lower slurry is dried due to the procedural characteristics, and in this instance, since the slurry is flowable, the upper and lower slurries mix at the interlayer interface, so it is difficult to completely prevent interferences between active materials. Meanwhile, after the electrode slurry is dried, a process of applying pressure is performed to fit the pre-designed target dimension such as electrode thickness or porosity. When the electrode is manufactured by the wet on wet coating of the slurry as described above, the pressure is applied through the electrode surface, and in this case, more pressure may be applied near the electrode surface than the other regions, resulting in too low porosity near the electrode surface. When the porosity on the electrode surface is low, electrolyte wetting or ionic conductivity may get worse.

To solve this problem, in a multilayer electrode comprising a stack of unit electrode active material layers, there is a growing need for an electrode in which the porosity of the upper part of the electrode is properly maintained and avoid intermixing of upper and lower electrode active materials at the interlayer interface to improve electrolyte wetting or ionic conductivity.

DISCLOSURE

Technical Problem

The present disclosure is directed to providing a multilayer electrode for an electrochemical device with low intermixing of electrode active materials between layers. The present disclosure is further directed to providing a multilayer electrode having higher porosity of the upper part of the electrode. The present disclosure is further directed to providing a multilayer dry electrode comprising granules with low intermixing of electrode active materials between layers and higher porosity of the upper part of the electrode. It is apparent that these and other objectives and advantages of the present disclosure may be realized by the means or methods set forth in the appended claims and a combination thereof.

Technical Solution

A first aspect of the present disclosure relates to an electrode for an electrochemical device comprising a current collector and an electrode active material layer on at least one surface of the current collector, wherein the electrode active material layer comprises a unit electrode active material layer made of densely packed granules comprising an electrode active material and an electrode binder, wherein a first unit electrode active material layer to an n-th unit electrode active material layer are stacked in a sequential order from a surface of the current collector, where n is an integer of 2 or greater, and wherein a porosity of the n-th unit electrode active material layer disposed on a topmost side is highest among the unit electrode active material layers included in the electrode active material layer.

According to a second aspect of the present disclosure, in the first aspect, the n is 3 or greater and 10 or smaller.

According to a third aspect of the present disclosure, in the first or second aspect, the porosity of the n-th unit electrode active material layer is 40 vol% or less, the n-th unit electrode active material layer being present on the topmost side in the electrode active material layer.

According to a fourth aspect of the present disclosure, in any one of the first to third aspects, a porosity of the first unit electrode active material layer is 20 vol% or more.

According to a fifth aspect of the present disclosure, in any one of the first to fourth aspects, each unit electrode active material layer has higher porosity as it is farther away from the surface of the current collector.

According to a sixth aspect of the present disclosure, in any one of the first to fifth aspects, each unit electrode active material layer comprises a plurality of types of electrode active materials, and a combination of constituent elements (types) of the plurality of electrode active materials included in each unit electrode active material layer is identical, but a content ratio between each constituent element in each unit electrode active material layer is different.

According to a seventh aspect of the present disclosure, in the sixth aspect, the granules included in each unit electrode active material layer comprise the plurality of types of electrode active materials, and the combination of constituent elements (types) of the plurality of electrode active materials in the granules for each unit electrode active material layer is identical but the content ratio of constituent elements for each granule in each unit electrode active material layer is different.

According to an eighth aspect of the present disclosure, in any one of the first to seventh aspects, a difference between an amount of the electrode binder (wt%) in the top 100 wt% and an amount of the electrode binder (wt%) in the bottom 100 wt% in each unit electrode active material layer is 10 wt% or less on the basis of 1/2 of a height of the unit electrode active material layer.

According to a ninth aspect of the present disclosure, in any one of the first to eighth aspects, the n is 3 or greater, and a difference between the porosity of the first unit electrode active material layer on a bottommost side and the porosity of the n-th unit electrode active material layer on the topmost side is 5 vol% to 20 vol%.

According to a tenth aspect of the present disclosure, in any one of the first to ninth aspects, the electrode is a negative electrode, and the electrode active material comprises at least one selected from the group consisting of natural graphite, artificial graphite, lithium (Li), silicon (Si), tin (Sn), a lithium alloy, a silicon alloy, a tin alloy, a silicon oxide, a tin oxide, a lithium-containing compound, a silicon-containing compound and a tin-containing compound.

According to an eleventh aspect of the present disclosure, in any one of the first to tenth aspects, the granules comprise an electrode conductive material.

According to a twelfth aspect of the present disclosure, in any one of the first to eleventh aspects, the current collector has a primer layer on at least one surface such that the primer layer covers all or part of the surface, and the primer layer comprises a conductive material and a binder.

A thirteenth aspect of the present disclosure relates to a method for manufacturing an electrode for an electrochemical device, the method comprising coating a powder for the electrode on a surface of a current collector and applying pressure to form a first unit electrode active material layer of layered structure having a predetermined thickness, coating an additional powder for the electrode to a surface of each unit electrode active material layer formed in the previous step and applying pressure to form another unit electrode active material layer, and repeating this process n-1 times to manufacture the electrode comprising n unit electrode active material layers, wherein the electrode has the structure of the electrode according to any one of the first to twelfth aspects, and the n is an integer of 2 or greater.

Advantageous Effects

The electrode according to the present disclosure is an electrode having a multilayer structure formed by stacking the plurality of unit electrode active material layers. The electrode is formed from the granules comprising the electrode active material densely packed in each unit electrode active material layer, and even though different types of electrode active materials are used in each unit electrode active material layer, the intermixing of the electrode active materials does not occur at or near the interface of the unit electrode active material layer, resulting in less interferences of electrochemical properties between the different types of electrode active materials. Additionally, the electrode active material layer has higher porosity of the unit electrode active material layer closer to the electrode surface than the unit electrode active material layer closer to the current collector. Accordingly, it may be possible to improve electrolyte wetting and ionic conductivity of the electrode. Additionally, the electrode according to the present disclosure does not need to control the pressure when performing a calendering process for forming each unit electrode active material layer, and even though the same pressure is maintained, the electrode may have a porosity gradient for each unit electrode active material layer due to the properties of the materials included in each layer.

DESCRIPTION OF DRAWINGS

The accompanying drawings illustrate an exemplary embodiment of the present disclosure and together with the foregoing disclosure, serve to provide further understanding of the technical features of the present disclosure, and thus, the present disclosure should not be construed as being limited to the drawings.

FIG. 1 is a schematic cross-sectional view of an electrode according to an embodiment of the present disclosure.
FIG. 2 shows Nyquist Plot results of batteries of example and comparative example.
FIG. 3 shows a core and a shell of a granule 100 according to an embodiment of the present disclosure.
FIG. 4 is a scanning electron microscopy (SEM) image of a first granule obtained by the above-described manufacture.

BEST MODE

Hereinafter, the present disclosure will be described in detail. However, the present disclosure is not limited by the following description, and if necessary, each element may be modified variously or combined selectively. Accordingly, it should be understood that the present disclosure covers all modifications, equivalents or substitutes included in the technical aspect and scope of the present disclosure.

It should be further understood that 'comprising' when used in this specification, specifies the presence of stated elements, but does not preclude the presence or addition of one or more other elements unless expressly stated otherwise.

Additionally, the terms 'about' and 'substantially' are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

Throughout the disclosure, 'A and/or B' refers to either A or B or both.

The terminology as used herein is for the purpose of convenience, but not intended to be limiting. For example, the terms 'upper', 'lower', 'left', 'right', 'front', 'rear', 'inner' and 'outer' may be used to describe relative locations or directions between elements rather than absolute positions or to indicate locations or directions in the drawings to which reference is made. These terms include words including them and derivatives and synonyms thereof as well.

The "glass transition temperature (Tg)" as used herein is measured by methods commonly used in the corresponding technical field, and for example, may be measured by differential scanning calorimetry (DSC).

The "porosity" as used herein refers to a fraction of voids in a structure over the total volume and is indicated in vol%, and may be used interchangeably with void fraction, degree of porosity or the like. In the present disclosure, the measurement of the porosity is not limited to a particular method, and according to an embodiment of the present disclosure, for example, the porosity may be measured by a Brunauer-Emmett-Teller (BET) measurement method using nitrogen gas, Hg porosimeter and ASTM D-2873. Alternatively, the net density of an object may be calculated from the density (apparent density) of the object, the composition ratio of the materials included in the object and the density of each constituent element, and the porosity of the object may be calculated from a difference of apparent density and net density.

The "average particle size $(D_{50})$" as used herein refers to a particle size at 50% of cumulative particle size distribution of particles, and the particle size may be measured using a laser diffraction method. Specifically, the particle size distribution is calculated by dispersing a target powder in a dispersion medium, introducing it into a commercially available laser diffraction particle size measurement device (for example, Microtrac S3500) and measuring a diffraction pattern difference according to the particle size when particles pass through a laser beam. In the measurement device, the particle size $D_{50}$ may be measured by calculating the particle diameter at 50% of the cumulative particle size distribution of particles.

The "thickness" of each layer included in the electrode as used herein may indicate a value measured by known methods for measuring the thickness. The thickness measurement method is not limited thereto, but the thickness may be, for example, a value measured using a thickness measurement device (Mitutoyo, VL-50S-B).

The "specific surface area" as used herein may refer to a value measured by known methods for measuring the specific surface area. The method for measuring the specific surface area is not limited thereto, but the specific surface area may be, for example, a value measured by a flowable or fixed method.

The present disclosure relates to an electrode for an electrochemical device. The electrode may be a positive or negative electrode according to the polarity of the electrode. The electrochemical device of the present disclosure comprises any device capable of facilitating electrochemical reaction, and in a specific example, may comprise any type of primary battery, secondary battery, fuel battery, solar battery or capacitor such as super capacitor. In the present disclosure, the electrochemical device may be preferably a secondary battery, and more preferably a lithium ion secondary battery. In a specific embodiment of the present disclosure, the electrochemical device may comprise either the positive or negative electrode according to the present disclosure or both.

The electrode according to an aspect of the present disclosure comprises a current collector and an electrode active material layer on at least one surface of the current collector.

The electrode active material layer is formed using granules comprising an electrode active material and an electrode binder. In a specific embodiment of the present disclosure, the electrode active material layer comprises at least two unit electrode active material layers (hereinafter referred to as unit layer) in which granules are densely packed.

In an embodiment of the present disclosure, the electrode active material layer may further comprise free electrode active material particles, free binder particles and free conductive material particles that have been derived from granules or do not participate in the formation of the granules. In a specific embodiment of the present disclosure, the electrode active material layer may preferably comprise 80 wt% or more, 90 wt% or more or 95 wt% or more or 99 wt% or more of granules based on 100 wt% of the electrode active material layer. Additionally, each unit layer may comprise 80 wt% or more, 90 wt% or more or 95 wt% or more or 99 wt% or more of granules based on 100 wt% of the unit layer.

The electrode comprises a first unit electrode active material layer to an n-th unit electrode active material layer stacked in a sequential order from the current collector surface, and here, n is an integer of 2 or greater, and the n-th unit electrode active material layer disposed on the topmost side has the highest porosity among the unit electrode active material layers included in the electrode active material layer.

In the present disclosure, the electrode active material layer has a multilayer structure in which n unit layers are stacked in a sequential order from the current collector surface. Here, n is an integer of 2 or greater, and among the n unit layers, the unit layer disposed on the current collector surface is referred to as a first unit layer, and the unit layer disposed farthest away from the current collector is referred to as an n-th unit layer.

In the present disclosure, the electrode active material layer has the highest porosity of the topmost layer (the n-th unit layer) disposed on the topmost side of the electrode active material layer among each unit layer. The topmost layer is disposed farthest away from the current collector among the unit layers and refers to the unit layer in contact with the separator when manufacturing the electrode.

The electrode active material layer may include 2 or more, 3 or more or 5 or more unit layers. The number of unit layers is not limited to a particular range, but may be 20 or less, or 10 or less, or 7 or less, or 5 or less.

Meanwhile, in an embodiment of the present disclosure, the thickness of each unit layer in the electrode active material layer may be in a range between 20% and 80% based on the total thickness 100% of the electrode active material layer.

The thickness of the topmost layer in the electrode active material layer may be in a range between 20 and 80%.

The thickness of the bottommost layer in the electrode active material layer may be in a range between 80 and 20%.

The electrode active material layer may have pores provided by interstitial volume or spaces between the granules, and may exhibit porous properties derived from this structure. In an embodiment of the present disclosure, the electrode active material layer preferably has the porosity of 20 vol% to 40 vol% in view of electrolyte wetting, shape stability and ionic conductivity.

Meanwhile, in the present disclosure, a porosity difference between each unit layer in contact with each other is 1 vol% or more, and preferably 2 vol% or more. Meanwhile, the porosity difference between each unit layer is preferably 20 vol% or less. In a specific example, the porosity difference may be 10 vol% or less, or 5 vol% or less. In an embodiment of the present disclosure, the electrode active material layer preferably comprises three or more unit layers to avoid a sharp porosity difference between layers.

In an embodiment of the present disclosure, each unit layer may increase in porosity in a sequential order as it is farther away from the current collector surface, and among the unit layers, the porosity of the topmost layer is highest. The increasing porosity as it goes toward the topmost layer may allow smooth movement of lithium ions, leading to uniform electrochemical reaction in the thicknesswise direction of the electrode active material layer.

Meanwhile, in a specific embodiment of the present disclosure, the porosity of the n-th unit layer (the topmost layer) may be 50 vol% or less, 40 vol% or less, 35 vol% or less, or 30 vol% or less. In an embodiment, the porosity of the n-th unit layer may be 30 vol% to 40 vol%, and may be 33 vol% to 37 vol%. Additionally, the porosity of the first unit layer may be 20 vol% or more. In case that the porosity of the topmost layer is too high or the porosity of the first unit layer is too low, it is difficult to control the total porosity of the electrode active material layer within a proper range, and thus the porosity of the topmost layer and the first unit layer is preferably within the above-described range.

In an embodiment of the present disclosure, the electrode active material layer may comprise three or more unit layers, and in this instance, the porosity difference between the first unit layer and the topmost layer is 5 vol% to 20 vol%, preferably 8 vol% to 12 vol%, and more preferably 8 vol% to 12 vol%.

Additionally, in an embodiment of the present disclosure, each unit layer has uniform binder distribution on the basis of the thicknesswise direction. In a specific embodiment, when each unit layer is divided into top and bottom on the basis of 1/2 of the height of the unit layer, a difference between the binder content (wt%) in the top 100 wt% and the binder content (wt%) in the bottom 100 wt% may show a value 10 wt% or less. This binder distribution may result from the granules densely packed in the electrode active material layer according to the present disclosure. The electrode manufacturing method of the present disclosure as described below is characterized by manufacturing granule particles comprising the electrode material, coating the granule particles on the current collector and applying pressure to densely pack the granules into a layered structure. In the case of the electrode manufacturing method including preparing the slurry, the migration of the binder is induced by the evaporation of the solvent during the drying of the slurry, and the binder is intensively distributed on the electrode surface. However, since the present disclosure uses the method of densely packing the granule particles in dry state without using a solvent, the migration of the binder does not occur. Accordingly, it results in uniform binder distribution in the thicknesswise direction in each unit layer.

In the present disclosure, the granule may be in a form of a composite particle comprising an electrode active material and an electrode binder, and an arbitrary constituent element added as necessary. Specifically, the granule may be a secondary particle formed by two or more electrode active material particles bonded by the electrode binder. In the present disclosure, the electrode active material may refer to a collection of particles, and here the diameter of each particle of the electrode active material may be 0.05 $\mu$m to 2 $\mu$m.

In a specific embodiment of the present disclosure, the electrode active material may be included in an amount of 80 wt% or more or 90 wt% or more based on the total 100 wt% of the granules, and the electrode binder may be included in an amount of 20 wt% or less or 10 wt% or less. In an embodiment of the present disclosure, the granules may further comprise an arbitrary electrode conductive material if necessary. The electrode conductive material may be included in a range between 0.1 wt% and 20 wt%, preferably 0.1 wt% and 10 wt% based on 100 wt% of the granules. For example, the conductive material may be included in the granules in a range between about 0.1 and 5 wt%.

According to an embodiment of the present disclosure, the amount of the electrode active material in the granules may be 85 wt% to 98 wt%. Within the above-described range, the amount of the electrode binder may be 0.5 to 10 wt%, and the amount of the electrode conductive material may be 0.5 wt% to 5 wt%. According to another embodiment, the amount of the electrode active material may be 90 wt% to 98 wt%, the amount of the electrode binder may be 0.5 wt% to 5 wt%, and the amount of the electrode conductive material may be 0.5 wt% to 5 wt%.

Meanwhile, in an embodiment of the present disclosure, the electrode active material layer may comprise the same or different electrode active materials included in each unit layer. For example, each unit layer of the electrode active material layer may comprise different electrode active materials, or at least two unit layers in contact with each other among the unit layers included in the electrode active material layer may comprise different electrode active materials. In an embodiment of the present disclosure, when the electrode active material layer includes three unit layer in total, each of the first unit layer and the second unit layer may comprise different electrode active materials. Along with this or independently of this, each of the second unit layer and the third unit layer may comprise different electrode active materials.

When different types of electrode active materials are used in each of the two unit layers in contact with each other, electrochemical reaction interferences between the electrode active materials do not occur at the interface between the unit layers, thereby maximizing the effect of the multilayer electrode.

In another embodiment, each unit layer may comprise the plurality of types of electrode active materials and the elemental (type) combinations of the plurality of electrode active materials in each unit layer may be identical but the content ratio between each constituent element in each unit layer may be different.

More preferably, the granules included in each unit layer may comprise the plurality of types of electrode active materials and the granules in each unit layer may have the same elemental (type) combination of the plurality of electrode active materials but different content ratios of constituent elements for each granule in each unit layer.

In a specific embodiment, in case that the electrode is a negative electrode, the electrode active material layer may comprise artificial graphite and/or natural graphite as a negative electrode active material. In an embodiment of the present disclosure, the amount of artificial graphite and natural graphite in the granules may be different for each unit layer. Specifically, the amount of artificial graphite in the granules may increase as it goes from the first unit layer to the n-th unit layer. Independently of this or along with this, the amount of natural graphite in the granules may decrease as it goes from the first unit layer toward the topmost layer or the n-th unit layer. In case that the amount of artificial graphite included in the granules increases and the amount of natural graphite decreases as it goes toward the topmost layer, and along with this or independently of this, the amount of artificial graphite in the granules decreases and the amount of natural graphite increases as it goes toward the bottommost layer, even though the identical or similar level of pressure is applied for each layer, the electrode active material layer having different porosity for each unit layer, in particular, the highest porosity of the topmost layer may be obtained due to the difference in unique properties of each granule when pressed.

In a specific embodiment of the present disclosure, the bottommost layer or the first unit layer in the electrode active material layer may comprise a plurality of first granules, the first granules may comprise natural graphite and artificial graphite as the electrode active material, and the natural graphite may be included in the first granules in an amount of 50 wt% or more, or 70 wt% or more based on 100 wt% of the electrode active material. Preferably, the first unit layer may comprise the first granules in an amount of 90 wt% or more, and more preferably 99 wt% or more based on 100 wt% of the unit layer.

Additionally, in a specific embodiment of the present disclosure, the topmost layer or the n-th unit layer in the electrode active material layer may comprise a plurality of n-th granules, the n-th granules may comprise artificial graphite alone or both natural graphite and artificial graphite as the electrode active material, and the artificial graphite may be included in the n-th granules in an amount of 80 wt% or more, preferably 90 wt% or more or 99 wt% or more based on 100 wt% of the electrode active material. Preferably, the n-th granules may be included in the n-th unit layer in an amount of 90 wt% or more, and preferably 99 wt% or more based on 100 wt% of the unit layer.

In the second layer, the third layer ... the n-2-th layer, and the n-1-th layer between the first layer and the n-th layer, as it goes toward the n-th layer, the amount of artificial graphite in the granules may increase, and the amount of natural graphite in the granules may increase as it goes toward the first layer.

In a specific embodiment of the present disclosure, the electrode active material layer may include the first, second and third unit layers stacked in a sequential order.

In a specific embodiment of the present disclosure, the bottommost layer or the first unit layer in the electrode active material layer may comprise the plurality of first granules, the first granules may comprise natural graphite and artificial graphite as the electrode active material, and the amount (Nc1) of the natural graphite in the first granules may be 50 wt% or more, or 70 wt% or more based on 100 wt% of the electrode active material. Preferably, the first unit layer may comprise the first granules in an amount of 90 wt% or more, and more preferably 99 wt% or more based on 100 wt% of the unit layer.

Additionally, the second unit layer may comprise the plurality of second granules, the second granules may comprise natural graphite and artificial graphite as the electrode active material, and the amount (Nc2) of the natural graphite in the second granules may be adjusted to a range between 30 wt% and 70 wt%, and preferably 30 wt% and 50 wt% based on 100 wt% of the electrode active material and may be smaller than Nc1. Preferably, the second unit layer may comprise the second granules in an amount of 90 wt% or more, and more preferably 99 wt% or more based on 100 wt% of the unit layer.

Additionally, the third unit layer may comprise the plurality of third granules, the third granules may comprise artificial graphite alone or both natural graphite and artificial graphite as the electrode active material, and the amount (Ac3) of the artificial graphite in the third granules may be more than 70 wt%, 80 wt% or more, and preferably 90 wt% or more or 99 wt% or more based on 100 wt% of the electrode active material. Preferably, the third unit layer may comprise the third granules in an amount of 90 wt% or more, and preferably 99 wt% or more based on 100 wt% of the unit layer. Additionally, the amount (Ac1) of the artificial graphite in the first granules based on 100 wt% of the electrode active material, the amount (Ac2) of the artificial graphite in the second granules based on 100 wt% of the electrode active material, and the amount (Ac3) of the artificial graphite in the third granules based on 100 wt% of the electrode active material are preferably Ac1 < Ac2 < Ac3.

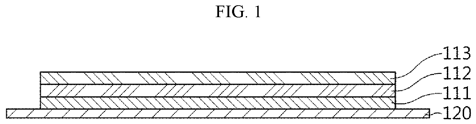

FIG. 1 shows the cross section of the electrode comprising three unit layers according to an embodiment of the present disclosure. The electrode 100 may comprise the electrode active material layer 110 on surface of the current collector 120, and the electrode active material layer may comprise the first unit layer 111, the second unit layer 112 and the third unit layer 113 stacked in a sequential order from the current collector surface. Here, the porosity of the electrode active material layer may be in a range between 20 vol% and 40 vol%. The porosity of the first unit layer may be 20 vol% or more, and the porosity of the third unit layer may be 40 vol%. A difference between the porosity of the first unit layer and the porosity of the third unit layer may be 5 vol% to 15 vol%. Meanwhile, each of the porosity difference between the first unit layer and the second unit layer and the porosity difference between the second unit layer and the third unit layer may be independently 1 vol% or more.

Additionally, in each of the first unit layer to the third unit layer, a difference between the binder content (wt%) in the top 100 wt% and the binder content (wt%) in the bottom 100 wt% on the basis of 1/2 of the height of the unit electrode active material layer may be 10 wt% or less.

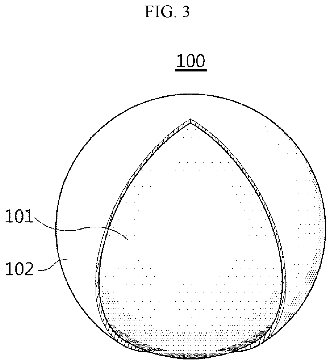

In the present disclosure, the granule 100 may have a higher amount of the electrode binder included in a shell 102 than the amount of the electrode binder included in a core 101. The amount of the binder may be weight or volume. FIG. 3 shows the shell and the core in the granule 100 according to an embodiment of the present disclosure.

Along with this or independently of this, the granule may have a higher amount of the electrode binder (wt%)($B_s/G_t$) included in the shell than the amount of the electrode binder (wt%)($B_c/G_t$) included in the core based on the total weight 100 wt% of the granules. Here, the Bc denotes the weight of the binder included in the core, the Bs denotes the weight of the binder included in the shell, and the Gt denotes the total weight of the granule particles.

Along with this or independently of this, the granule may have a higher amount of the electrode binder (vol%)($B_s/G_t$) included in the shell than the amount of the electrode binder (vol%)($B_c/G_t$) included in the core based on the total volume 100 vol% of the granules. Here, the Bc denotes the volume of the binder included in the core, the Bs denotes the volume of the binder included in the shell, and the Gt denotes the total volume of the granule particles.

Here, the shell may be a region near the granule surface to a predetermined depth in a direction toward the granule center from the granule surface. The core refers to a region other than the shell. In an embodiment of the present disclosure, the shell may refer specifically to a surface region of 30% of the radius inwards from the granule surface, to be specific, in a direction toward the granule center. In an embodiment of the present disclosure, the shell may refer to a surface region of 30%, 20%, 15%, 10% or 5% of the radius from the granule surface. Preferably, the shell may refer to a surface region of 20% of the radius from the granule surface.

Meanwhile, in an embodiment of the present disclosure, the shell may refer to a region of 70% or more of the radius outwards from the granule center. In an embodiment of the present disclosure, the shell may, for example, refer to a region of 80% or more, 85% or more, 90% or more or 95% or more of the radius to the granule surface.

In an embodiment of the present disclosure, the granule center may refer to 1/2 of the longest diameter of the granule. In the present disclosure, the radius may refer to a distance from the granule center to each point of the granule surface. In an embodiment of the present disclosure, the shell and the core may be divided on the basis of the point located at the equal distance from each surface of the granule along each radius, to be specific, the location corresponding to 30%, 20%, 10%, 5% or 1% of the corresponding radius from the surface.

In an embodiment of the present disclosure, the amount of the electrode binder in the region of 90% or more of the radius from the granule particle center to the granule surface may be 50 wt% or more, 60 wt% or more, 70 wt% or more, 80 wt% or more, or 90 wt% or more based on the total weight 100 wt% of the granules in the corresponding region.

In another embodiment of the present disclosure, the amount of the electrode binder in the region of 95% or more of the particle radius from the granule center to the granule surface may be 50 wt% or more, 60 wt% or more, 70 wt% or more, 80 wt% or more or 90 wt% or more based on the total weight 100 wt% of the granules in the corresponding region.

In another embodiment of the present disclosure, the amount of the electrode binder in the region of 99% or more of the radius from the granule particle center to the granule surface may be 50 wt% or more, 60 wt% or more, 70 wt% or more, 80 wt% or more, or 90 wt% or more based on the total weight 100 wt% of the granules in the corresponding region.

In an embodiment of the present disclosure, the amount of the electrode binder in the region of 90% or more of the radius from the granule particle center to the granule surface may be 50 vol% or more, 60 vol% or more, 70 vol% or more, 80 vol% or more, or 90 vol% or more based on the total volume 100 vol% of the granules in the corresponding region.

In another embodiment of the present disclosure, the amount of the electrode binder in the region of 95% or more of the particle radius from the granule center to the granule surface may be 50 vol% or more, 60 vol% or more, 70 vol% or more, 80 vol% or more, or 90 vol% or more based on the total volume 100 vol% of the granules in the corresponding region.

In another embodiment of the present disclosure, the amount of the electrode binder in the region of 99% or more of the radius from the granule particle center to the granule surface may be 50 vol% or more, 60 vol% or more, 70 vol% or more, 80 vol% or more, or 90 vol% or more based on the total volume 100 vol% of the granules in the corresponding region.

Describing the granule in more detail, the granule may comprise the core comprising the plurality of electrode active materials; and the shell disposed on all or part of the outer side of the core and comprising the electrode binder binding the electrode active materials. That is, in the core of the granule, the plurality of electrode active materials may come into contact with each other in at least one of surface contact, line contact or point contact to form an agglomerate, and in the shell of the granule, the electrode binder may be disposed on all or part of the outer side of the agglomerate to securely bind the plurality of electrode active materials of the core of the granule.

According to an embodiment of the present disclosure, the core may further comprise a small amount of electrode binder to connect and immobilize the plurality of electrode active materials of the core. However, as described above, a ratio of the amount of the electrode binder in the shell is preferably higher than that of the core.

Meanwhile, in an embodiment of the present disclosure, the granule may have an aspect ratio of 0.5 to 1.0, and preferably 0.75 to 1.0. The aspect ratio may refer to a ratio of a long axial length to a short axial length of the granule. In another embodiment of the present disclosure, the average aspect ratio of the granules may have a value of 0.5 to 1.0, and preferably 0.75 to 1.0, and in this case, the average aspect ratio may refer to a ratio of an average long axial length to an average short axial length of the granule. In this instance, the average short axial length may be the average length in the axial direction having the shortest length of the granule, and the average long axial length may be the average length in the axial direction having the longest length of the granule. When the aspect ratio of the granule satisfies the above-described range, it is advantageous since it has sufficient appropriate flowability for the process.

Meanwhile, in an embodiment of the present disclosure, the particle size of the granule may be in a range between 0.1 and 1,000 $\mu$m on the basis of the longest diameter. In another embodiment of the present disclosure, the average particle size ($D_{50}$) of the granules may be in a range between 0.1 and 1,000 $\mu$m.

In an embodiment of the present disclosure, in case that the electrode is a negative electrode, the electrode active material may comprise, as a negative electrode active material, for example, carbon materials such as graphitizing carbon and/or nongraphitizing carbon; graphite-based carbon such as natural graphite and/or artificial graphite; metal composite oxide such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Groups 1, 2 and 3 elements in the periodic table, halogen; $0 < x \leq 1$; $1 \leq y \leq 3$; $1 \leq z \leq 8$); lithium metals; lithium alloys; silicon; silicon-based alloys; tin; tin-based alloys; silicon-based oxide such as SiO, SiO/C, $SiO_2$; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; conductive polymer such as polyacetylene; Li-Co-Ni-based materials, but is not limited thereto.

Meanwhile, in an embodiment of the present disclosure, in case that the electrode is a positive electrode, the electrode active material may comprise, as a positive electrode active material, at least one of layered compounds such as lithium manganese composite oxide ($LiMn_2O_4$, $LiMnO_2$, etc.), lithium cobalt oxide ($LiCoO_2$), lithium nickel oxide ($LiNiO_2$)

or compounds with one or more transition metal substitution; lithium manganese oxide of formula $Li_{1+x}Mn_{2-x}O_4$ (where x is 0 to 0.33), $LiMnO_3$, $LiMn_2O_3$, $LiMnO_2$; lithium copper oxide ($Li_2CuO_2$); vanadium oxide such as $LiVsOs$, $LiV_3O_4$, $V_2O_5$, $Cu_2V_2O_7$; Ni site lithium nickel oxide represented by formula $LiNi_{1-x}M_xO_2$ (where M = Co, Mn, Al, Cu, Fe, Mg, B or Ga, x = 0.01 to 0.3); lithium manganese composite oxide represented by formula $LiMn_{2-x}M_xO_2$ (where M = Co, Ni, Fe, Cr, Zn or Ta, x = 0.01 to 0.1) or $Li_2Mn_3MO_8$ (where M = Fe, Co, Ni, Cu or Zn); $Li_{1+x}(Ni_aCo_bMn_cAl_d)_{1-x}O_2$ (x = 0 to 0.03, a = 0.3 to 0.95, b = 0.01 to 0.35, c = 0.01 to 0.5, d = 0.001 to 0.03, a+b+c+d=1) with partial substitution of aluminum ion for Li in formula; disulfide compounds; or $Fe_2(MoO_4)_3$.

The electrode binder is not limited to a particular type and may include any binder that has adhesive properties, is stable in electrochemical reaction, and binds the electrode materials such as the electrode active material and the electrode conductive material to maintain the granular shape and binds the granules by compaction to form a layered structure and keep it stable in shape. Non-limiting examples of the electrode binder may include at least one of styrene butadiene rubber (SBR), butadiene rubber (BR), nitrile butadiene rubber (NBR), styrene butadiene styrene block copolymer (SBS), styrene ethylene butadiene block copolymer (SEB), styrene-(styrene butadiene)-styrene block copolymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexylacrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan or cyanoethylpolyvinylalcohol. Specifically, the binder may comprise styrene butadiene rubber (SBR), nitrile butadiene rubber (NBR), polymethylmethacrylate, polyethylhexylacrylate and polybutylacrylate. In a specific embodiment, the electrode binder may comprise at least one selected from them.

The electrode conductive material is not limited to a particular type and may include any material having conductive properties while not causing any chemical change to the corresponding battery. Its non-limiting examples may include graphite such as natural graphite or artificial graphite; carbon black-based carbon compounds such as carbon black, acetylene black, ketjen black, channel black, furnace black, lamp black, thermal black; conductive fibers such as carbon fibers or metal fibers; metal powder such as fluorocarbon, aluminum and nickel powder; conductive whiskers such as zinc oxide, potassium titanate; conductive metal oxide such as titanium oxide; conductive materials such as polyphenylene derivatives. In a specific embodiment, the electrode conductive material may comprise at least one selected from them.

The current collector is not limited to a particular type and may include any material having high conductivity while not causing any chemical change to the corresponding battery. The current collector may include, for example, stainless steel, aluminum, nickel, titanium, sintered carbon, copper or aluminum or stainless steel surface-treated with carbon, nickel, titanium or silver. The current collector may also have microtexture on the surface to increase the adhesion strength of the active material, and may come in various type, for example, a film, a sheet, a foil, a net, a porous body, a foam, a nonwoven fabric or the like. Meanwhile, in an embodiment of the present disclosure, the thickness of the current collector may be 10 $\mu$m to 50 $\mu$m, but is not limited thereto. The thickness of the current collector may be, for example, 10 $\mu$m to 20 $\mu$m.

Meanwhile, in the present disclosure, the current collector may have a primer layer on at least one surface, and the primer layer may cover all or at least part of the surface. The primer layer may be introduced to improve the bonding strength between the current collector and the electrode active material layer and electrical conductivity. The primer layer may comprise a second conductive material and a second binder resin. The above description of the electrode conductive material may apply to the second conductive material. Additionally, the above description of the electrode binder may apply to the second binder resin.

Meanwhile, in another embodiment of the present disclosure, the primer layer may have the following technical features.

The primer layer may comprise the binder for the primer layer (hereinafter, the second binder) and the conductive material for the primer layer (hereinafter, the second conductive material), and the sum of amounts of the second binder and the second conductive material in the primer layer may be 90 wt% or more.

Since the electrode according to an embodiment of the present disclosure comprises the electrode active material layer comprising the granules, and in this instance, the primer layer comprises the second binder and the second conductive material such that the sum of amounts of the second binder and the second conductive material is 90 wt% or more, it may be possible to ensure time-dependent stability of the primer layer, thereby achieving the outstanding properties such as adhesion strength, life characteristics or the like, but the present disclosure is not limited thereto.

According to an embodiment of the present disclosure, the primer layer comprises the second binder and the second conductive material, and may further comprise a dispersant.

According to another embodiment of the present disclosure, the primer layer comprises the second binder and the second conductive material, and may not substantially comprise the dispersant.

According to an embodiment of the present disclosure, the second binder may comprise, without limitation, any known binder used in the primer layer.

According to another embodiment of the present disclosure, the second binder may preferably comprise a polymer for ensuring time-dependent stability of the primer layer. Specifically, the second binder may have the glass transition temperature (Tg) of 45°C or less.

According to another embodiment of the present disclosure, the second binder may comprise, for example, at least one of styrene butadiene rubber (SBR), butadiene rubber (BR), nitrile butadiene rubber (NBR), styrene butadiene styrene block copolymer (SBS), styrene ethylene butadiene block copolymer (SEB), styrene-(styrene butadiene)-styrene block copolymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexylacrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan or cyanoethylpolyvinylalcohol. Specifically, the binder may comprise at least one of styrene butadiene rubber (SBR), nitrile butadiene rubber (NBR), polymethylmethacrylate, polyethylhexylacrylate or polybutylacrylate.

According to another embodiment of the present disclosure, the second binder may be at least one selected from the above-described types of binders having the above-described glass transition temperature value.

According to another embodiment of the present disclosure, the second binder may include styrene butadiene rubber (SBR) having the glass transition temperature (Tg) of -40°C to 45°C, nitrile butadiene rubber (NBR) glass transition temperature (Tg) of -40°C to 45°C or a mixture thereof.

According to an embodiment of the present disclosure, the second conductive material may have the specific surface area of 30 m$^2$/g to 1,400 m$^2$/g and a spherical shape. In this instance, the primary particle size of the conductive material having the spherical shape may be, for example, 10 nm to 100 nm, and specifically 15 nm to 70 nm, but is not limited thereto.

According to another embodiment of the present disclosure, the second conductive material may have a tubular (tube type) shape having the specific surface area of 10 m$^2$/g to 400 m$^2$/g. In this instance, in the conductive material having the tubular shape, the diameter of a cross section in a direction perpendicular to the lengthwise direction may be 0.1 to 3 nm, and specifically 0.3 to 1.5 nm, but is not limited thereto.

The second conductive material is not limited to a particular type and may include any material having conductive properties while not causing any chemical change to the corresponding battery, and for example, may include graphite such as natural graphite or artificial graphite; carbon black-based carbon compounds such as carbon black, acetylene black, ketjen black, channel black, furnace black, lamp black, thermal black; conductive fibers such as carbon fibers or metal fibers; metal powder such as fluorocarbon, aluminum and nickel powder; conductive whiskers such as zinc oxide, potassium titanate; conductive metal oxide such as titanium oxide; conductive materials such as polyphenylene derivatives, but specifically, to uniformly mix the conductive material and improve conductivity, the second conductive material may comprise activated carbon, graphite, carbon black, carbon nanotubes or a mixture thereof, and more specifically, activated carbon.

According to an embodiment of the present disclosure, the primer layer may include the above-described composition, and have the thickness of 300 nm to 1.5 $\mu$m, and specifically 700 nm to 1.3 $\mu$m, but is not limited thereto.

Subsequently, a method for manufacturing the electrode according to the present disclosure will be described.

First, the granules comprising the electrode material are manufactured. The granules may be obtained by a method including mixing the electrode active material and the electrode binder with a solvent to prepare a flowable slurry and spray drying the slurry. In an embodiment of the present disclosure, the granules may further comprise the electrode conductive material if necessary. Additionally, an additive may be further included to improve the performance.

First, the electrode active material and the electrode binder, and optionally, the additive are dispersed or dissolved in the dispersion medium (the solvent for the electrode binder) to obtain the slurry in which the electrode active material and the electrode binder are dispersed or dissolved.

The dispersion medium used to obtain the slurry is most suitably, water, but may include an organic solvent. The organic solvent may include, for example, alkylalcohols such as methylalcohol, ethylalcohol, propylalcohol; alkylketones such as acetone, methylethylketone; ethers such as tetrahydrofuran, dioxane, diglyme; amides such as diethylformamide, dimethylacetoamide, N-methyl-2-pyrrolidone (hereinafter referred to as NMP), dimethylimidazolidinone; sulfur-based solvents such as dimethylsulfoxide, sulfolane, but alcohols are preferred. When the organic solvent having lower boiling point than water is used, the drying rate may increase during the flowable assembly. Additionally, since the dispersion or solubility of the negative electrode binder may change, the viscosity or flowability of the slurry may be adjusted according to the amount or type of the dispersion medium, thereby improving the production efficiency.

The dispersion medium used to prepare the slurry may be present in such an amount that the solids concentration in the slurry is in a range between 1 and 50 wt%, or 5 and 50 wt%, or 10 and 30 wt%.

The method or order of dispersing or dissolving the electrode active material and the electrode binder in the dispersion medium is not limited to a particular method or order, and for example, a method which adds the electrode active material and the electrode binder to the dispersion medium and mixes them, and a method which dissolves or disperses the electrode binder in the dispersion medium, and finally, adds the electrode active material and mixes them. When the conductive material or the additive is included, they may be fed when feeding the electrode active material. The mixing means may include, for example, a ball mill, a sand mill, a bead mill, a pigment dispersion machine, a stone mill, an ultrasonic dispersion machine, a homogenizer and a planetary mixer. The mixing may be, for example, performed in a range between room temperature and 80°C for 10 minutes to a few hours.

Subsequently, the slurry is spray dried. The spray drying method dries the slurry while spraying the slurry in hot air. The spray method of equipment using the spray drying method includes a rotary disc method and a pressure nozzle method. The rotary disc method is a method which feeds the slurry into almost the center of the disc that rotates at high speed, urges the slurry to the periphery of the disc by the centrifugal force of the disc, to create mist and dries it. The rotation rate of the disc relies on the size of the disc, but is usually 5,000 rpm to 35,000 rpm, and preferably 15,000 rpm to 30,000 rpm. Meanwhile, the pressure nozzle method is a method which sprays the slurry from the nozzle by pressure to convert into mist and dries it.

Meanwhile, the temperature of the slurry being sprayed may be room temperature, but it is desirable to increase the temperature above room temperature to form the granule structure having high electrode binder content on the surface. In an embodiment of the present disclosure, the hot air temperature (on the basis of the reactor inlet temperature) during the spray drying is usually 80°C to 250°C, and preferably 100°C to 220°C. More preferably, the hot air temperature is 180°C to 220°C. In the spray drying method, the hot air suction method is not limited to a particular method, and may include, for example, a method of cocurrent flow of hot air and spray direction in the horizontal direction, a method of spraying from a drying tower top to cause it fall together with hot air, a method of countercurrent contact between sprayed droplets and hot air, a method of cocurrent flow of sprayed droplets and hot air, fall by gravity and countercurrent contact. Meanwhile, in an embodiment of the present disclosure, the outlet temperature (the temperature of hot air released from the reactor) of the reactor during the spray drying may be controlled to 90°C to 130°C.

Additionally, optionally, thermal treatment may be performed to cure the surface of the result obtained by the spray drying, i.e., the granules, and in this instance, the thermal treatment temperature may be usually 80°C to 300°C.

Subsequently, the granules are distributed over the surface of the electrode current collector, and pressing is performed to form the first unit layer of the layered structure having the predetermined thickness. Subsequently, when the first unit layer is formed, the granules are additionally coated on the first unit layer and pressing is performed to form an additional unit layer, and the coating and pressing processes are repeatedly performed until the electrode active material layer including a stack of a predetermined number of unit layers is obtained. The pressure applied when forming each unit layer may be controlled for proper porosity of each unit layer as described above. Meanwhile, in an embodiment of the present disclosure, different constituent elements or amounts (and/or different content ratios) of the electrode active materials for each unit layer may be prepared and the granules may be selected and introduced according to the characteristics of each unit layer. Each unit layer may be formed by the following method.

The current collector may have the above-described primer layer comprising the second conductive material and the second binder on all or part of at least one surface.

According to an embodiment of the present disclosure, the plurality of prepared granules may be fed to a roll type press forming machine using a feeder such as a screw feeder to form the unit layer. When forming the first unit layer, the current collector may be transferred to the press forming machine at the same time of feeding the granules to directly stack the first unit layer on the current collector. Alternatively, the granules may be distributed over the current collector and undergo uniform thickness adjustment using a blade, and then formed using the roll press forming machine to form the first unit layer. In the process subsequent to the first unit layer, instead of the current collector, the granules may be distributed over the surface of the underlying unit layer and undergo uniform thickness adjustment using the blade, and then formed using the roll press forming machine to form each unit layer.

In these methods, the temperature of the roll press forming may be usually 0°C to 200°C, and preferably may be higher than the melting point or glass transition temperature of the negative electrode binder, and more preferably higher by 20°C or more than the melting point or glass transition temperature. The forming rate of the roll press forming may be usually 0.1 to 20 m/min, or 1 to 10 m/min. Additionally, the press line pressure between rolls may be usually 0.2 to 30 kN/cm, or 0.5 to 10 kN/cm.

To reduce the thickness difference of each formed unit layer and increase the density of the unit layer and the electrode active material layer, thereby contributing to high capacity, pressing may be additionally performed if necessary. In general, the post-pressing method uses a press process by rolls. In the roll press process, two cylindrical rolls are vertically arranged in parallel at a small interval, and the electrode is placed between the rolls and pressed by rotating the rolls in the opposite directions. The rolls may undergo temperature adjustment by heating or cooling.

While the present disclosure has been hereinabove described with reference to the embodiments and drawings, it will be obvious to those skilled in the art to make various modifications and changes to the present disclosure within the scope of the present disclosure based on the foregoing description.

**Example 1**

(1) Preparation of current collector having primer layer

30 parts by weight of carbon black (specific surface area: 30 m$^2$/g, particle size: 70 nm), 69 parts by weight of styrene-butadiene rubber (SBR) (T$_g$: -15°C) as a second binder, and 1 part by weight of carboxymethyl cellulose (CMC) as a dispersant were mixed in water as a dispersion medium to prepare a primer layer slurry. In this instance, the content ratio of the conductive material, the binder and the dispersant in the slurry is the same as a content ratio of a conductive material, a binder and a dispersant in a primer layer that will be formed. A ratio of solids in the primer layer slurry is 7 wt%.

The prepared primer layer slurry was coated on one surface of a copper current collector (thickness: 10 $\mu$m) and dried in 130°C condition to form the primer layer over the entire surface of the copper current collector.

(2) Preparation of granules for negative electrode active material layer

First, second and third granules were prepared, and the following [Table 1] summaries a content ratio of natural graphite and artificial graphite in each granule.

[Table 1]

|  | Artificial graphite (sphericity 0.9) | Natural graphite (sphericity 0.95) |
|---|---|---|
| First granule (bottommost layer) | 50 wt% | 50 wt% |
| Second granule | 70 wt% | 30 wt% |
| Third granule (topmost layer) | 100 wt% | 0 wt% |

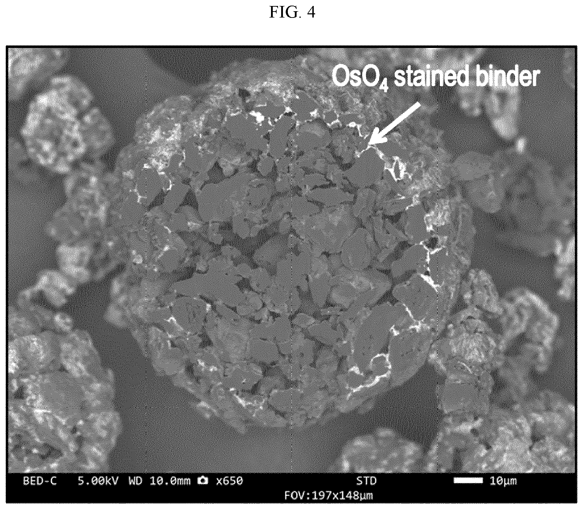

Each granule was manufactured by the following method. A negative electrode active material, carbon black (SuperC65), carboxymethyl cellulose (daicel2200, aqueous solution, solids concentration 1.5 wt%) and a modified styrene butadiene copolymer (Grade Name: AX-B119) were mixed with water as a dispersion medium at a weight ratio of 95.6:1.0:1.1:2.3 through a homogenizer to prepare a slurry having the viscosity of about 1000 cPs level. In this instance, the solids content in the slurry was 30 wt%. In the weight ratio, carboxymethyl cellulose is calculated on the basis of solids. The prepared slurry was fed into a spray dryer together with hot air in the pressure range condition of -40mmH$_2$O and dried. In this instance, the condition of the spray dryer was controlled such that the inlet temperature is about 180°C, the outlet temperature is about 90°C, and the rotation rate is about 18,000 rpm. Coarse powder of 150 $\mu$m or more was removed from the obtained granules using an industrial sieve, and fine powder of less than 40 $\mu$m was separated again. The separated fine powder was mixed with the granules free of coarse powder to finally prepare granules for the negative electrode containing a larger amount of fine powder. The average particle size (D$_{50}$) of the obtained granules is about 66.5 $\mu$m, and the aspect ratio is about 0.96. FIG. 4 is a scanning electron microscopy (SEM) image of the first granules obtained by the above-described manufacture, and the bright section indicated by the arrow indicates the binder resin. The binder in each of the obtained first granules was stained using OsO$_4$. The staining was performed by placing the granules in a glass funnel using OsO$_4$ crystals or aqueous solution and vaporizing a reagent to cause reaction. Subsequently, an epoxy resin was mixed, held in a silicone mold and cured to obtain a granule matrix. Subsequently, a cross section sample of the granule matrix was made using an ion milling machine (Hitachi IM5000 acceleration voltage: 6 kV) and an SEM image was obtained.

(3) Manufacture of negative electrode

The first granules were uniformly coated on one surface of the current collector having the primer layer in an amount of 120 mg per 25cm$^2$ of the current collector using a thickness adjustment bar, and subjected to roll-to-roll hot rolling to form a first layer. Subsequently, the second granules were uniformly coated on the surface of the first layer in an amount of 120 mg per 25cm$^2$ and subjected to roll-to-roll hot rolling to form a second layer. Subsequently, the third granules were uniformly coated on the surface of the second layer in an amount of 120 mg per 25cm$^2$ and subjected to roll-to-roll hot rolling to form a third layer. The pressure of 0.7 ton per cm was applied under about 60°C at the rate of 2m per second during each rolling when forming the first, second and third layers.

**Comparative example 1**

Natural graphite having the average sphericity of 0.95 and artificial graphite having the average sphericity of 0.9 was prepared as a negative electrode active material.

Subsequently, first, second and third layer slurries were prepared. Each slurry was prepared by mixing the negative electrode active material, carbon black (Super-C 65), styrene butadiene rubber (SBR), carboxymethyl cellulose (CMC) and water, and the solids concentration in the slurry was about 47 wt%. The negative electrode active material, carbon black, SBR and CMC were mixed at a weight ratio of about 95.6:1.0:2.3:1.1. The following [Table 2] summarizes the content ratio of artificial graphite and natural graphite in each layer.

[Table 2]

|  | Artificial graphite (sphericity 0.9) | Natural graphite (sphericity 0.95) |
|---|---|---|
| First layer slurry (bottommost layer) | 50 wt% | 50 wt% |
| Second layer slurry | 70 wt% | 30 wt% |
| Third layer slurry (topmost layer | 100 wt% | 0 wt% |

Subsequently, the first layer slurry, the second layer slurry and the third layer slurry were coated on the current collector prepared in example 1 using a slot die in a sequential order. Subsequently, the first, second and third layer slurries were dried using a dryer with a hot air blower and an IR heater and rolled by roll pressing to manufacture a negative electrode having a negative electrode active material layer. The loading amount of the negative electrode active material layer was 360 mg /25cm$^2$ per unit area. During the rolling of the electrode active material layer, the pressure of 0.7 ton per cm was applied under about 60°C at the rate of 2m per second.

**Comparative example 2**

First, second and third layer slurries were prepared by the same method as comparative example 1. Subsequently, the first layer slurry was coated on the current collector prepared in example 1 using a slot die and dried to form a first layer. Subsequently, the second layer slurry was coated on the first layer and dried to form a second layer. Subsequently, the third layer slurry was coated on the second layer and dried. The drying was performed using a dryer with a hot air blower and an IR heater. Subsequently, rolling was performed by roll pressing to manufacture a negative electrode having a negative electrode active material layer. The loading amount of the negative electrode active material layer was 360 mg/25cm$^2$ per unit area. During the rolling of the electrode active material layer, the pressure of 0.7 ton per cm was applied under about 60°C at the rate of 2m per second.

**Comparative example 3**

A monolayer electrode was manufactured using the first granules prepared in example 1. The first granules were uniformly coated on one surface of the current collector prepared in example 1 in an amount of 360 mg per 25 cm$^2$ of the current collector using a thickness adjustment bar and subjected to roll-to-roll hot rolling to form an electrode active material layer. During the rolling, the pressure of 0.7 ton per cm was applied under about 60°C at the rate of 2m per second.

**Comparative example 4**

An electrode was manufactured using the first, second and third granules prepared in example 1. The electrode was manufactured by the same method as example 1 except the third granules were coated on the surface of the current collector to form a first layer, and subsequently, a second layer was formed using the second granules, and the first granules were coated on the surface of the second layer to form a topmost layer.

**Measurement of porosity**

The porosity of each electrode active material layer of examples 1 and 2 and comparative examples 1 to 4 was measured. In the case of the monolayer electrode, the porosity of the entire electrode active material layer was measured, and in the case of the multilayer electrode, the total porosity of the entire electrode active material layer was measured, and the porosity of each layer was measured.

The total thickness of the electrode active material layer and the thickness of each unit layer was calculated from the cross-sectional SEM image of the electrode active material layer. For the porosity measurement, after calculating the electrode active material layer from the composition ratio of the materials included in the electrode active material layer and the density of each constituent element, the porosity may be calculated from a difference between apparent density and net density. Specifically, the porosity may be calculated by the following [Equation 1].

[Equation 1]

$$\text{Porosity (vol\%)} = \{1-(\text{apparent density/net density})\} \times 100$$

Meanwhile, the apparent density in the above equation may be calculated from the following [Equation 2].

Apparent density (g/cm$^3$)= {electrode active material layer weight[g]/(electrode active material layer thickness[cm] $\times$ electrode active material layer area[cm$^2$])}    [Equation 2]

The following [Table 3] summarizes the porosity calculated in each example and comparative example.

[Table 3]

| | Porosity (vol%) | | | | Note |
|---|---|---|---|---|---|
| | Electrode active material layer | First layer | Second layer | Third layer | |
| Example 1 (3 layers) | 27 | 25 | 27 | 29 | High porosity of topmost layer |
| Comparative example 1 (3 layers but equal porosity in all the layers) | 27 | 27 | 27 | 27 | No porosity gradient for each layer |
| Comparative example 2 (3 layers) | 27 | 25 | 27 | 29 | High porosity of topmost layer |
| Comparative example 3 (monolayer) | 27 | - | - | - | High porosity of bottommost layer |
| Comparative example 4 (3 layers) | 27 | 29 | 27 | 25 | |

**Manufacture of battery**

Batteries were manufactured using the negative electrodes obtained in example 1 and comparative examples 1 to 4. LiNi$_{0.8}$Co$_{0.1}$Mn$_{0.1}$O$_2$, PVdF and carbon black were mixed at a weight ratio of 97.0:1.5:1.5, and dispersed in 2-methyl-2-pyrrolidone to prepare a positive electrode slurry, and the slurry was coated on an aluminum current collector, followed by drying and rolling, to manufacture a positive electrode. The negative electrode and the positive electrode were placed with a porous film of polyethylene interposed between to manufacture a battery. An electrolyte solution is a mixture of ethylene carbonate:ethylmethyl carbonate at a volume ratio of 1:2 with an addition of 1M LiPF$_6$.

**Evaluation of capacity retention**

Each battery of example 1 and comparative examples 1 to 4 was charged with 0.33C until the voltage reaches 0.01V (Vs. Li) and discharged with the same current until the voltage reaches 3V. Subsequently, charging and discharging repeated 200 cycles in the same current and voltage range. The charging/discharging was performed under the ambient temperature of about 45°C.

The capacity retention may be calculated by the following Equation 3.

Capacity retention(%)=[200$^{th}$ cycle discharge capacity/2$^{nd}$ cycle discharge capacity] $\times$ 100    [Equation 3]

[Table 5]

| | Example 1 | Comparative example 1 | Comparative example 2 | Comparativ e example 3 | Comparative example 4 |
|---|---|---|---|---|---|
| Capacity retention (%) 45°C, 200 cycle | 87.8% | 82.2% | 63.9% | 75.0% | 44.5% |

It was confirmed that the battery of example 1 had very high capacity retention. In contrast, the battery of comparative example 2 showed high porosity of the upper layer but very low capacity retention. This may show that rapid degradation occurs in the upper layer due to the resistance at the interlayer interface and accordingly the capacity retention reduces. In contrast, it was confirmed that when the porosity on the electrode surface is low, the capacity retention is low as in comparative examples 3 and 4.

**Evaluation of EIS characteristics**

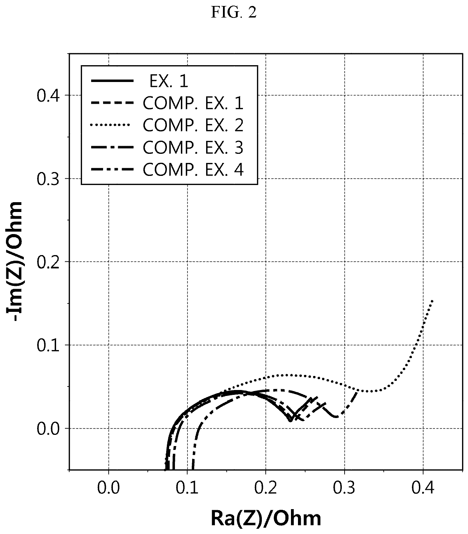

The resistance was measured through electrochemical impedance spectroscopy analysis results in the condition of 10 mV amplitude and the scan range between 2000 Hz and 0.1 Hz at 25 °C using Solaton's 1470E cell test system and Frequency response analyzer 1255B, and its Nyquist Plot results are shown in FIG. 2. Referring to FIG. 2, it was confirmed that additional resistance was not occurred in the battery of example 1. In contrast, it was confirmed that additional resistance occurred in the batteries of comparative examples 2 and 4. Comparative example 2 had high porosity on the electrode surface, but low interfacial resistance characteristics since the slurry was coated on each dried unit layer, and the binder in the slurry coated on the unit layer was infiltrated into the pores of the underlying unit layer, causing the clogged pores. On the other hand, comparative example 4 had low resistance characteristic due to poor electrolyte flowing into the electrode.

**Claims**

1.  An electrode for an electrochemical device, comprising:

    a current collector and an electrode active material layer on at least one surface of the current collector,
    wherein the electrode active material layer comprises a unit electrode active material layer made of densely packed granules comprising an electrode active material and an electrode binder, wherein a first unit electrode active material layer to an n-th unit electrode active material layer are stacked in a sequential order from a surface of the current collector, where n is an integer of 2 or greater, and
    wherein a porosity of the n-th unit electrode active material layer disposed on a topmost side is highest among the unit electrode active material layers included in the electrode active material layer.

2.  The electrode for the electrochemical device according to claim 1, wherein the n is 3 or greater and 10 or smaller.

3.  The electrode for the electrochemical device according to claim 1, wherein the porosity of the n-th unit electrode active material layer is 40 vol% or less, the n-th unit electrode active material layer being present on the topmost side in the electrode active material layer.

4.  The electrode for the electrochemical device according to claim 1, wherein a porosity of the first unit electrode active material layer is 20 vol% or more.

5.  The electrode for the electrochemical device according to claim 1, wherein each unit electrode active material layer has higher porosity as it is farther away from the surface of the current collector.

6.  The electrode for the electrochemical device according to claim 1, wherein each unit electrode active material layer comprises a plurality of types of electrode active materials, and a combination of constituent elements (types) of the plurality of electrode active materials included in each unit electrode active material layer is identical, but a content ratio between each constituent element in each unit electrode active material layer is different.

7.  The electrode for the electrochemical device according to claim 6, wherein the granules included in each unit electrode active material layer comprise the plurality of types of electrode active materials, and the combination of constituent elements (types) of the plurality of electrode active materials in the granules for each unit electrode active material layer is identical but the content ratio of constituent elements for each granule in each unit electrode active material layer is different.

8.  The electrode for the electrochemical device according to claim 1, wherein a difference between an amount of the electrode binder (wt%) in the top 100 wt% and an amount of the electrode binder (wt%) in the bottom 100 wt% in each unit electrode active material layer is 10 wt% or less on the basis of 1/2 of a height of the unit electrode active material layer.

9. The electrode for the electrochemical device according to claim 1, wherein the n is 3 or greater, and a difference between the porosity of the first unit electrode active material layer on a bottommost side and the porosity of the n-th unit electrode active material layer on the topmost side is 5 vol% to 20 vol%.

10. The electrode for the electrochemical device according to claim 1, wherein the electrode is a negative electrode, and the electrode active material comprises at least one selected from the group consisting of natural graphite, artificial graphite, lithium (Li), silicon (Si), tin (Sn), a lithium alloy, a silicon alloy, a tin alloy, a silicon oxide, a tin oxide, a lithium-containing compound, a silicon-containing compound and a tin-containing compound.

11. The electrode for the electrochemical device according to claim 1, wherein the granules comprise an electrode conductive material.

12. The electrode for the electrochemical device according to claim 1, wherein the current collector has a primer layer on at least one surface such that the primer layer covers all or part of the surface, and the primer layer comprises a conductive material and a binder.

13. A method for manufacturing an electrode for an electrochemical device, the method comprising:
coating a powder for the electrode on a surface of a current collector and applying pressure to form a first unit electrode active material layer of layered structure having a predetermined thickness, coating an additional powder for the electrode to a surface of each unit electrode active material layer formed in the previous step and applying pressure to form another unit electrode active material layer, and repeating this process n-1 times to manufacture the electrode comprising n unit electrode active material layers, wherein the electrode has the structure according to claim 1, and the n is an integer of 2 or greater.

FIG. 1

FIG. 2

FIG. 3

<u>100</u>

101

102

FIG. 4

## INTERNATIONAL SEARCH REPORT

| | |
|---|---|
| International application No. |
| **PCT/KR2023/001366** |

**A. CLASSIFICATION OF SUBJECT MATTER**

**H01M 4/62**(2006.01)i; **H01M 4/04**(2006.01)i; **H01M 4/131**(2010.01)i; **H01M 4/1391**(2010.01)i; **H01M 4/36**(2006.01)i; **H01M 4/66**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/62(2006.01); H01M 10/052(2010.01); H01M 10/0525(2010.01); H01M 4/13(2010.01); H01M 4/131(2010.01); H01M 4/133(2010.01); H01M 4/1391(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 기공도(porosity), 그래뉼(granule), 전극 활물질층(electrode active material)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2016-0118586 A (LG CHEM, LTD.) 12 October 2016 (2016-10-12)<br>    See paragraph [0036]; example 2; and claims 1-2, 4-5, 10, 12, 15 and 19. | 1-13 |
| Y | KR 10-2016-0016898 A (TOYOTA JIDOSHA KABUSHIKI KAISHA) 15 February 2016 (2016-02-15)<br>    See paragraphs [0026]-[0027] and [0061]. | 1-13 |
| Y | KR 10-2021-0155609 A (SK INNOVATION CO., LTD.) 23 December 2021 (2021-12-23)<br>    See claim 1. | 6-7 |
| Y | KR 10-2016-0040830 A (LG CHEM, LTD.) 15 April 2016 (2016-04-15)<br>    See claims 1 and 4. | 12 |
| A | JP 2013-069681 A (IWATE UNIV. et al.) 18 April 2013 (2013-04-18)<br>    See entire document. | 1-13 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 May 2023** | **09 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/001366**

| Patent document cited in search report | | | Publication date (day/month/year) | Patent family member(s) | | | Publication date (day/month/year) |
|---|---|---|---|---|---|---|---|
| KR | 10-2016-0118586 | A | 12 October 2016 | KR | 10-1839754 | B1 | 19 March 2018 |
| KR | 10-2016-0016898 | A | 15 February 2016 | CN | 105359315 | A | 24 February 2016 |
| | | | | CN | 105359315 | B | 20 April 2018 |
| | | | | JP | 2015-011835 | A | 19 January 2015 |
| | | | | JP | 6453532 | B2 | 16 January 2019 |
| | | | | KR | 10-1833919 | B1 | 02 March 2018 |
| | | | | US | 2016-0149217 | A1 | 26 May 2016 |
| | | | | US | 9819025 | B2 | 14 November 2017 |
| | | | | WO | 2014-207521 | A1 | 31 December 2014 |
| KR | 10-2021-0155609 | A | 23 December 2021 | CN | 113809283 | A | 17 December 2021 |
| | | | | US | 2021-0391570 | A1 | 16 December 2021 |
| KR | 10-2016-0040830 | A | 15 April 2016 | KR | 10-1811833 | B1 | 25 January 2018 |
| JP | 2013-069681 | A | 18 April 2013 | JP | 2017-092048 | A | 25 May 2017 |
| | | | | JP | 6300434 | B2 | 28 March 2018 |
| | | | | JP | 6448681 | B2 | 09 January 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220013757
- KR 1020220031451